# EUROPÄISCHE PATENTSCHRIFT

(11) **EP 2 731 789 B1**
(45) Veröffentlichungstag und Bekanntmachung des Hinweises auf die Patenterteilung: **25.12.2019**
(21) Anmeldenummer: 12737488.2
(22) Anmeldetag: 10.07.2012
(51) Int. Cl.: B29C 70/42, B29C 70/86, F03D 1/06, B29C 70/72, F03D 80/30

(54) **EINRICHTUNG UND VERFAHREN ZUR FERTIGUNG EINES BAUTEILS**
DEVICE AND METHOD FOR MANUFACTURING A COMPONENT
DISPOSITIF ET PROCÉDÉ DE FABRICATION D'UN ÉLÉMENT DE STRUCTURE

(30) Priorität: 15.07.2011 DE 102011079240
(43) Veröffentlichungstag der Anmeldung: 21.05.2014
(73) Patentinhaber: Senvion GmbH, 22297 Hamburg (DE); Carbon Rotec GmbH & Co. KG, 27809 Lemwerder (DE)
(72) Erfinder: RICHERS, Tilman, 24118 Kiel (DE); ZELLER, Lenz Simon, 24114 Kiel (DE); DÄNEKAS, Kai, 27809 Lemwerder (DE)
(74) Vertreter: Murgitroyd & Company
(86) Internationale Anmeldenummer: PCT/EP2012/002900
(87) Internationale Veröffentlichungsnummer: WO 2013/010645

(56) Entgegenhaltungen:
- EP-A1- 1 134 069
- GB-A- 2 084 507
- US-A1- 2008 302 469
- US-A1- 2009 148 655

## Beschreibung

Die Erfindung betrifft eine Einrichtung zur Fertigung eines Faserverbundbauteils, das mit einem Anbauelement verbunden ist oder wird, für ein Rotorblatt einer Windenergieanlage, wobei das Anbauelement mit einem ersten, außerhalb des Faserverbundbauteils angeordneten Bereich und einem zweiten, in das Faserverbundbauteil integrierten Bereich vorgesehen ist. Die Erfindung betrifft ferner ein Verfahren zum Fertigen eines Faserverbundbauteils für ein Rotorblatt einer Windenergieanlage. Die Offenbarung betrifft außerdem ein Faserverbundbauteil für ein Rotorblatt einer Windenergieanlage, ein Rotorblatt einer Windenergieanlage und eine Windenergieanlage.

Bekannt sind Rotorblätter für Windenergieanlagen aus mehreren Einzelteilen, die einzeln in Faserverbundbauweise gefertigt und zu einem Rotorblatt verklebt werden. Die Einzelteile weisen zum Teil erhebliche Ausmaße auf und sind gewöhnlich flächig, d.h. die Dicke ist wesentlich kleiner als die Länge und die Breite.

Für die Herstellung großer Einzelteile in Faserverbundbauweise ist im Stand der Technik beispielsweise die so genannte Vakuuminfusionstechnologie bekannt. Dabei wird zunächst trockenes Faserhalbzeug in einer Form ausgelegt, die die endgültige Oberflächenform des Einzelteils vorgibt. Die Form mit dem Faserhalbzeug wird, beispielsweise mittels Vakuumfolie, abgedichtet und evakuiert. Sodann wird die Form mit einem Vorrat an Harz verbunden, das aufgrund des in der Form herrschenden Unterdrucks in die Form gesaugt wird und dort das Faserhalbzeug durchtränkt. Nach Aushärten des Harzes wird dann das Bauteil aus der Form entnommen und weiter verarbeitet.

Teilweise wird an einem Einzelteil für ein Rotorblatt ein Anbauteil, beispielsweise ein Kabel oder eine Haltevorrichtung, befestigt bzw. bei der Fertigung in das Einzelteil integriert. Hierbei kann es gefordert sein, dass das Anbauteil abschnittsweise und ohne Beschädigung des Einzelteils von außen zugänglich ist.

Im Stand der Technik ist bekannt, das Anbauteil zusammen mit dem Faserhalbzeug und weiteren Komponenten für das Rotorblatteinzelteil in die Fertigungsform einzulegen und die Fertigungsform mit Vakuumfolie abzudichten, wobei diejenigen Teile des Anbauteils, die später von außen zugänglich sein sollen, außerhalb der Dichtung zu platziert werden. Dieses Verfahren erfordert einen relativ hohen Arbeitsaufwand und große Sorgfalt bei der Abdichtung der Fertigungsform. Zudem ist es nur anwendbar, wenn das Anbauteil an der der Form abgewandten Seite des Rotorblatteinzelteils angebracht werden soll.

Alternativ dazu wird das Rotorblatteinzelteil zunächst ohne das Anbauteil gefertigt, wobei das Anbauteil anschließend an dem fertigen Rotorblatteinzelteil befestigt wird, beispielsweise durch Kleben oder Anlaminieren. Dieses Verfahren erfordert einen zusätzlichen Bearbeitungszyklus und ist daher zeit- und kostenaufwendig. Die Offenbarunger der US 2009/148655 A1, US 2008/302469 A1 und GB 2084507A können zum Verständnis der vorliegenden Erfindung hilfreich sein.

Es ist Aufgabe der vorliegenden Erfindung, eine Einrichtung und ein Verfahren zur Fertigung eines Faserverbundbauteils, das mit einem Anbauelement verbunden ist oder wird, für ein Rotorblatt einer Windenergieanlage anzugeben, wobei eine zeitsparende und kostengünstige Fertigung ermöglicht werden soll. Der Offenbarung liegt außerdem die Aufgabe zugrunde, ein entsprechendes Bauteil, ein entsprechendes Rotorblatt und eine entsprechende Windenergieanlage bereitzustellen.

Die Aufgabe wird gelöst durch eine Einrichtung zur Fertigung eines Faserverbundbauteils, das mit einem Anbauelement verbunden ist oder wird, für ein Rotorblatt einer Windenergieanlage, gemäß Anspruch 1. Vorteilhafte Ausführungsformen können Merkmale der abhängigen Ansprüche aufweisen. Das Faserverbundbauteil ist oder wird aus wenigstens einem Fasermaterial und wenigstens einem Matrixmaterial gefertigt, wobei das Anbauelement mit einem ersten, außerhalb des Faserverbundbauteils angeordneten Bereich und einem zweiten, in das Faserverbundbauteil integrierten Bereich vorgesehen ist, umfassend eine Fertigungsform für das Faserverbundbauteil mit einer Aussparung, wobei die Aussparung einen ersten Bereich zur Aufnahme des ersten Bereichs des Anbauelements aufweist, und eine Rückhaltevorrichtung, mittels derer fließfähiges Matrixmaterial vom ersten Bereich der Aussparung zurückgehalten ist oder wird. Daraufhin werden weitere Materialkomponenten für das Faserverbundbauteil, insbesondere wenigstens ein Fasermaterial, beispielsweise Gewebe, Gelege oder Rowings aus Glas-, Kohle- oder Kunststofffasern, in die Fertigungsform eingebracht und mit fließfähigem Matrixmaterial, beispielsweise Harz, Kunstharz oder Gießharz, benetzt bzw. getränkt. Nach dem Aushärten des Matrixmaterials wird dann ein Faserverbundbauteil bereitgestellt, bei dem die Fasern des Fasermaterials in eine Matrix aus ausgehärtetem Matrixmaterial eingebettet sind bzw. werden.

Durch die Erfindung wird erreicht, dass zusammen mit dem Fasermaterial insbesondere auch der zweite Bereich des Anbauelements in die Matrix des Faserverbundbauteils eingebettet und somit in das Faserverbundbauteil integriert ist bzw. wird, während der erste Bereich des Anbauelements nicht mit dem Matrixmaterial in Berührung kommt und daher außerhalb der Matrix verbleibt.

Im Rahmen der Erfindung ist die Ausgestaltung der Aussparung an die jeweiligen Erfordernisse des Einzelfalls anpassbar. So ist es beispielsweise denkbar, dass die Aussparung im ersten Bereich einen Durchbruch durch die Fertigungsform darstellt, wobei der erste Bereich des Anbauelements wenigstens teilweise außerhalb der Fertigungsform angeordnet ist oder wird. In diesem Fall werden lediglich ein erster Bereich der Aussparung und eine passende Abdichtung benötigt, die im Vergleich zum ersten Bereich des Anbauelements relativ klein sind.

Die Erfindung hat den Vorteil, dass das Anbauelement während der Fertigung des Faserverbundbauteils in der gewünschten Art und Weise integriert wird, wobei gegenüber der Fertigung eines vergleichbaren Faserverbundbauteils ohne integriertes Anbauelement lediglich einfache und wenig aufwändige zusätzliche Fertigungsschritte, nämlich das Einlegen des Anbauelements in die Fertigungsform und das bereichsweise Abdichten der Aussparung, benötigt werden.

Ein weiterer Vorteil besteht darin, dass die Positionierung des Anbauelements durch die Aussparung in der Fertigungsform vorgegeben ist bzw. wird. Dadurch wird gegenüber den zuvor beschriebenen bekannten Fertigungsmethoden sowohl eine genauere Positionierung des Anbauelements als auch eine verbesserte Reproduzierbarkeit der Position des Anbauelements ermöglicht.

Erfindungsgemäß weist die Aussparung einen zweiten Bereich zur Aufnahme des zweiten Bereichs des Anbauelements auf, um diesen vorteilhaften Nebeneffekt noch zu verstärken.

Bevorzugt ist ferner vorgesehen, dass die Rückhaltevorrichtung als Abdichtung ausgebildet ist, mittels derer der erste Bereich der Aussparung undurchlässig für fließfähiges Matrixmaterial abgedichtet ist oder wird.

Unter einer Abdichtung wird im Rahmen der Erfindung insbesondere eine Barriere verstanden, die das Eindringen von fließfähigem Matrixmaterial in den ersten Bereich der Aussparung im Wesentlichen verhindert, so dass sich die Matrix des Faserverbundbauteils nicht auf diesen Bereich erstreckt. Die Abdichtung erfolgt beispielsweise durch Einlegen eines an die Aussparung angepassten Abdichtkörpers oder durch wenigstens teilweises Auffüllen der Aussparung bzw. des erstem Bereichs der Aussparung mit einer Abdichtmasse.

Eine unter Umständen vorteilhafte Weiterbildung der Erfindung sieht ferner vor, dass die Rückhaltevorrichtung für den ersten Bereich der Aussparung wiederverwendbar ausgebildet ist. Eine wiederverwendbare Rückhaltevorrichtung oder Abdichtung wird beispielsweise dadurch bereitgestellt, dass der erste Bereich der Aussparung bei der Fertigung eines ersten Faserverbundbauteils mittels einer Abdichtmasse abgedichtet wird, wobei die Abdichtmasse ausgebildet ist, sich zu verfestigen oder verfestigt zu werden. Dadurch wird ein Abdichtkörper bereitgestellt, der für die Fertigung eines weiteren baugleichen Faserverbundbauteils zur Verfügung steht.

Eine besonders bevorzugte Ausgestaltung der Erfindung sieht vor, dass die Rückhaltevorrichtung für den ersten Bereich der Aussparung aus Silikon ausgebildet ist. Dieser Werkstoff ist besonders flexibel verwendbar und ermöglicht insbesondere sowohl den Einsatz als Abdichtmasse als auch die Ausbildung eines Abdichtkörpers.

Bei einer bevorzugten Weiterbildung der Erfindung ist außerdem eine Abdeckung vorgesehen, mittels derer der zweite Bereich der Aussparung durchlässig für fließendes Matrixmaterial wenigstens teilweise abgedeckt ist oder wird. Dabei ist bzw. wird die Abdeckung wie der zweite Bereich des Anbauelements in die Matrix des Faserverbundbauteils integriert bzw. eingearbeitet. Durch die Abdeckung wird verhindert, dass Fasermaterial für das Faserverbundbauteil in die Aussparung sinkt, Falten oder Verwerfungen bildet oder auf sonstige Weise in der Form verrutscht, was unter Umständen zu veränderten mechanischen Eigenschaften des Faserverbundbauteils führen würde.

Besonders vorteilhaft ist außerdem, wenn eine Oberseite der Rückhaltevorrichtung für den ersten Bereich der Aussparung und/oder eine Oberseite der Abdeckung für den zweiten Bereich der Aussparung im Wesentlichen eine Fortsetzung einer inneren Oberfläche der Fertigungsform bei der Aussparung darstellt.

Vorteilhaft ist darüber hinaus, wenn die Aussparung und/oder die Rückhaltevorrichtung für den ersten Bereich der Aussparung und/oder die Abdeckung für den zweiten Bereich der Aussparung wenigstens abschnittsweise formkomplementär zu dem Anbauelement ausgebildet ist bzw. sind. Hierdurch wird beispielsweise eine verbesserte Positionierung des Anbauelements und eine vereinfachte seitliche Abdichtung des ersten Bereichs der Aussparung ermöglicht.

Die Abdeckung für den zweiten Bereich der Aussparung ist beispielsweise als Hartfaserplatte ausgebildet. Eine derartige Abdeckung ist einfach zu bearbeiten und anzupassen, kostengünstig und leicht.

Die Aufgabe wird ferner gelöst durch ein Verfahren zum Fertigen eines Faserverbundbauteils, das mit einem Anbauelement verbunden ist oder wird, für ein Rotorblatt einer Windenergieanlage gemäß Anspruch 9. Vorteilhafte Ausführungsformen können Merkmale der abhängigen Ansprüche umfassen. Das Faserverbundbauteil ist oder wird aus wenigstens einem Fasermaterial und wenigstens einem Matrixmaterial gefertigt, wobei das Anbauelement mit einem ersten, außerhalb des Faserverbundbauteils angeordneten Bereich und mit einem zweiten, in das Faserverbundbauteil integrierten Bereich vorgesehen ist, umfassend die folgenden Verfahrensschritte:
- Einbringen des Anbauelements in eine Fertigungsform für das Faserverbundbauteil mit einer Aussparung, wobei der erste Bereich des Anbauelements in einem ersten Bereich der Aussparung angeordnet ist oder wird, und wobei der zweite Bereich des Anbauelements in einem zweiten Bereich der Aussparung angeordnet ist oder wird,
- Abdichten des ersten Bereichs der Aussparung gegen fließendes Matrixmaterial,
- Einbringen von Fasermaterial und fließfähigem Matrixmaterial für das Faserverbundbauteil in die Fertigungsform.

Daraufhin werden weitere Materialkomponenten für das Faserverbundbauteil, insbesondere wenigstens ein Fasermaterial, beispielsweise Gewebe, Gelege oder Rowings aus Glas-, Kohle- oder Kunststofffasern, in die Fertigungsform eingebracht und mit fließfähigem Matrixmaterial, beispielsweise Harz, Kunstharz oder Gießharz, benetzt bzw. getränkt. Nach dem Aushärten des Matrixmaterials wird dann ein Faserverbundbauteil bereitgestellt, bei dem die Fasern des Fasermaterials in eine Matrix aus ausgehärtetem Matrixmaterial eingebettet sind bzw. werden.

Das Faserverbundbauteil wird zusammen mit dem Anbauelement aus der Fertigungsform entnommen und steht nun einer Weiterbearbeitung zur Verfügung. Dabei ist insbesondere denkbar, dass der erste Bereich des Anbauelements von der Abdichtung gelöst und gegebenenfalls wenigstens teilweise vom Faserverbundbauteil beabstandet wird. Auch kann die Abdichtung vom Faserverbundbauteil entfernt werden.

Das erfindungsgemäße Verfahren wird beispielsweise dadurch weitergebildet, dass in der Fertigungsform wenigstens ein Teil des Fasermaterials unterhalb des zweiten Bereichs des Anbauelements angeordnet ist oder wird. Hierdurch wird eine zusätzliche Verstärkung für die Verbindung zwischen Faserverbundbauteil und Anbauelement bereitgestellt, wodurch ein Lösen oder Ausbrechen des Anbauelements erschwert wird.

Besonders bevorzugt ist oder wird der zweite Bereich der Aussparung für fließendes Matrixmaterial durchlässig wenigstens teilweise abgedeckt.

Bei einer besonders bevorzugten Ausführungsform des erfindungsgemäßen Verfahrens ist außerdem vorgesehen, dass der erste Bereich der Aussparung unter Verwendung von Silikon abgedichtet ist oder wird.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine Windenergieanlage,
- Fig. 2: schematisch eine perspektivische Schnittdarstellung durch ein beispielhaftes Rotorblatt einer Windenergieanlage gemäß der Erfindung,
- Fig. 3: schematisch eine beispielhafte Fertigungsform einer erfindungsgemäßen Einrichtung zur Fertigung eines Faserverbundbauteils für ein Rotorblatt einer Windenergieanlage,
- Fig. 4a: schematisch eine Schnittdarstellung der Fertigungsform aus Fig. 3 entlang der Linie A-A,
- Fig. 4b: schematisch eine Schnittdarstellung der Fertigungsform aus Fig. 3 entlang der Linie B-B,
- Fig. 5a: schematisch eine Schnittdarstellung analog der Darstellung in Fig. 4a für eine weitere Ausführungsform einer Fertigungsform einer erfinderischen Einrichtung zur Fertigung eines Faserverbundbauteils und
- Fig. 5b: schematisch eine Schnittdarstellung analog der Darstellung in Fig. 4b für eine weitere Ausführungsform einer Fertigungsform einer erfinderischen Einrichtung zur Fertigung eines Faserverbundbauteils.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

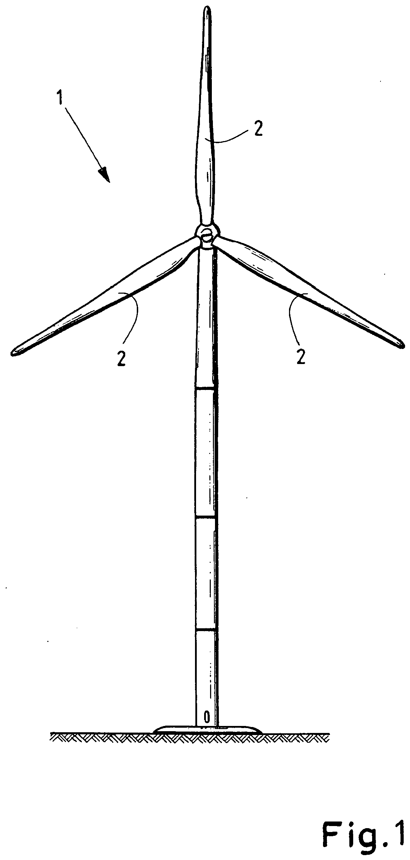

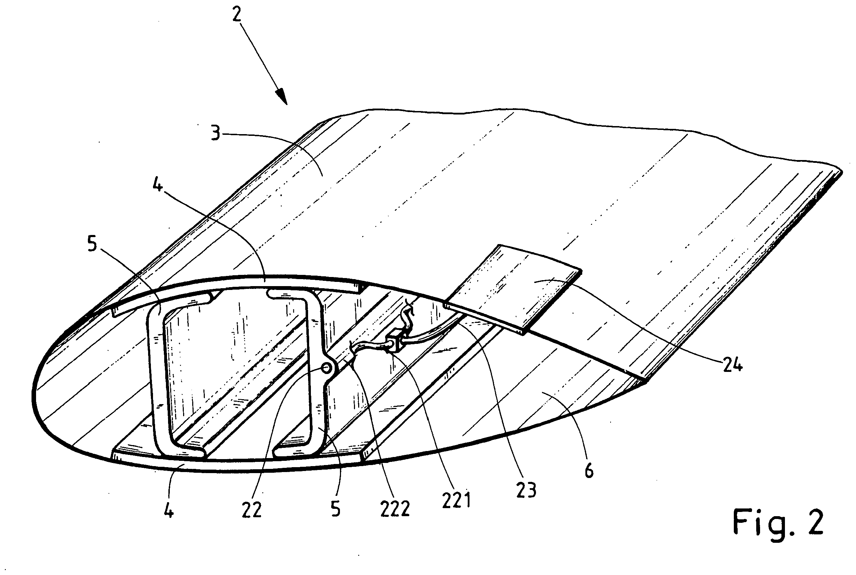

Fig. 1 zeigt eine typische Windenergieanlage 1 mit drei Rotorblättern 2, wobei die Erfindung nicht auf Windenergieanlagen des beispielhaft gezeigten Typs beschränkt ist. Eine perspektivische Schnittdarstellung eines der Rotorblätter 2 ist in Fig. 2 gezeigt.

Die tragende Struktur des beispielhaften Rotorblatts 2 wird gebildet aus zwei Rotorblattgurten 4 und zwei Rotorblattstegen 5, die zu einem Holmkasten verklebt sind. Dieser Holmkasten stützt die Rotorblattschale 3, die die aerodynamischen Eigenschaften des Rotorblatts 2 bestimmen. Im hinteren Hohlraum des Rotorblatts 2, dem Hinterkasten 6, sind Teile einer Blitzschutzeinrichtung dargestellt.

Das Blitzschutzsystem umfasst einen Rezeptor 24, der in die Rotorblattschale 3 integriert ist, um die aerodynamischen Eigenschaften des Rotorblatts 2 nicht zu beeinträchtigen. Der Rezeptor 24 ist über ein Anschlusskabel 23 sowie ein längs im Rotorblatt verlaufendes Blitzschutzkabel 22 geerdet.

Das Blitzschutzkabel 22 ist mit einem zweiten Abschnitt oder Bereich 222 in einen der Rotorblattstege 5 integriert, wobei eine Schlaufe bzw. ein erster Bereich oder Abschnitt 221 des Blitzschutzkabels 22 außerhalb des Rotorblattstegs 5 vorgesehen ist, um das Anschlusskabel 23 an das Blitzschutzkabel 22 anzuschließen.

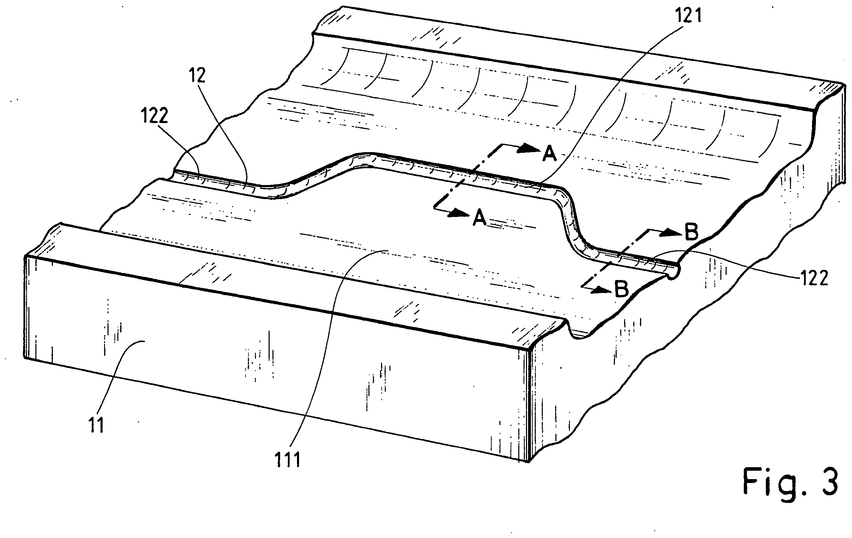

Eine beispielhafte Fertigungsform 11 für den beispielhaften Rotorblattsteg 5 mit dem abschnittsweise integrierten Blitzschutzkabel 22 ist in Fig. 3 gezeigt, wobei lediglich ein Abschnitt der Fertigungsform 11 dargestellt ist.

Die Fertigungsform 11 besteht im Wesentlichen aus einer wannenartigen Grundstruktur, die die Form des Rotorblattstegs 5 vorgibt. In dem gezeigten Beispiel weist die Fertigungsform 11 eine im Wesentlichen flache Oberfläche 111 mit hochgezogenen Seitenkanten auf. In der Fertigungsform 11 ist eine Aussparung 12 für das Blitzschutzkabel 22 vorgesehen. Die Aussparung 12 umfasst gerade, im Wesentlichen zur Längsausdehnung der Fertigungsform 11 parallele Abschnitte 122 sowie einen Bogen 121. Das Blitzschutzkabel 22 soll mit seinen in den geraden Bereichen 122 angeordneten Abschnitten bzw. Bereichen 222 in den Rotorblattsteg 5 integriert werden, während die Bereiche 221 des Blitzschutzkabels 22, die bei der Fertigung in den Bogen 121 eingelegt werden, eine Schlaufe außerhalb des Rotorblattstegs 5 bilden sollen.

Eine derartige Schlaufe wird auch mit einer Fertigungsform 11 ermöglicht, bei der die Aussparung 12 über die gesamte Länge der Fertigungsform 11 gerade verläuft, wobei anstatt des Bogens 121 ein Bereich 121 mit einem Durchbruch durch die Fertigungsform 11 vorgesehen ist. Durch diesen Durchbruch wird nun der für die Schlaufe vorgesehene Abschnitt 221 des Blitzschutzkabels aus der Fertigungsform 11 herausgeführt, so dass nur der relativ kurze Bereich 121 der Aussparung 12 mit dem Durchbruch abgedichtet werden muss. Der Vorteil dieser Ausführungsform liegt darin, dass mit einer Fertigungsform 11 bzw. einer Aussparung 12 verschieden lange Schlaufen realisierbar sind.

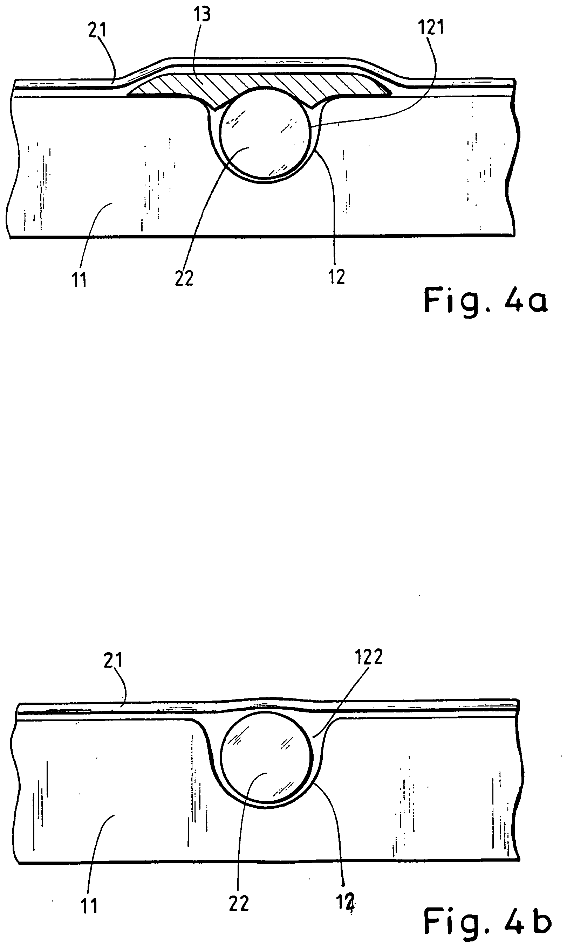

In Fig. 4a ist eine Schnittdarstellung der in Fig. 3 gezeigten Fertigungsform 11 entlang der Linie A-A, d.h. im Bereich des Bogens 121 der Aussparung 12, gezeigt. Außerdem dargestellt sind einige der Materialien, die während des Fertigungsprozesses in die Fertigungsform 11 eingebracht werden.

Die Aussparung 12 stellt in diesem Ausführungsbeispiel im Wesentlichen eine Rinne mit halbkreisförmigem Boden dar, die sich entlang der gesamten Fertigungsform 11 erstreckt und im Profil an den Durchmesser des Blitzschutzkabels 22 angepasst ist. Eine Abdichtung 13 verhindert, dass Harz oder sonstiges Matrixmaterial von oben in die Rinne fließt. An den Randbereichen des Bogens 121 ist die Abdichtung 13 zusätzlich derart ausgebildet, dass auch ein seitliches Eindringen von fließendem Matrixmaterial entlang der Aussparung 12 unterbunden wird.

Die Oberfläche 111 der Fertigungsform 11 sowie die Oberseite 131 der Abdichtung 13 bilden eine gemeinsame Fläche, auf der nun die weiteren Materialien, insbesondere Fasermaterial und Füllmaterialien, für den Rotorblattsteg 5 ausgelegt werden. In Fig. 4a ist exemplarisch eine einzelne Lage Fasermaterial 21 dargestellt, die beispielsweise eine erste Lage einer Vielzahl von Schichten für den Rotorblattsteg 5 ist.

Fig. 4b zeigt eine vergleichbare Schnittdarstellung entlang der Linie B-B aus Fig. 3, d.h. für den geraden Bereich 122 der Aussparung 12. Die Aussparung 12 weist hier beispielsweise denselben Querschnitt wie im Bogen 121 auf. Dieser Abschnitt bzw. Bereich 122 der Aussparung 12 ist bzw. wird nicht abgedichtet, so dass in die Fertigungsform 11 eingeleitetes Matrixmaterial die Aussparung 12 im besagten Bereich 122 auffüllt und so das Blitzschutzkabel 22 umschließt.

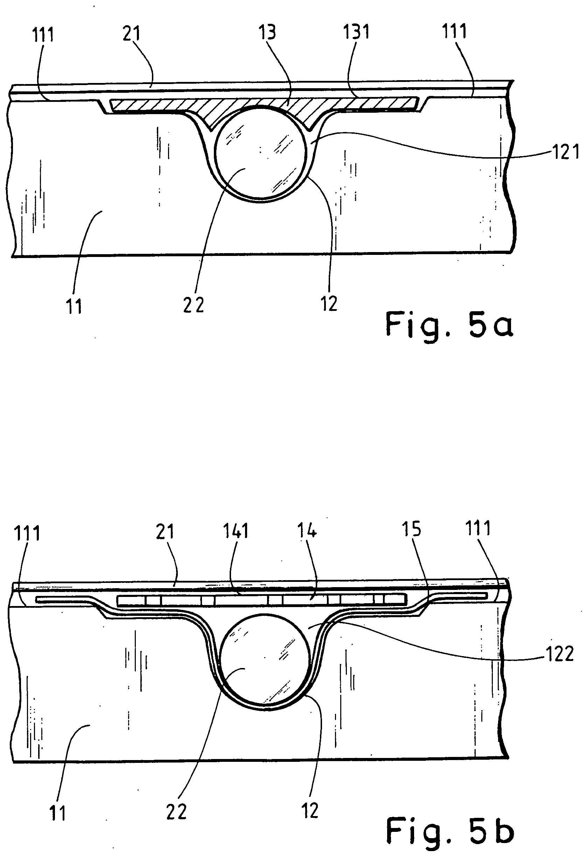

Eine weitere exemplarische Ausgestaltung für das Profil der Aussparung 12 ist in den Figuren 5a und 5b gezeigt. Analog zu Fig. 4a ist in Fig. 5a ein Bereich 121 dargestellt, in dem das Blitzschutzkabel 22 außerhalb des Rotorblattstegs 5 angeordnet ist, wobei Fig. 5b analog zu Fig. 4a einen Bereich 122 zeigt, in dem das Blitzschutzkabel 22 in den Rotorblattsteg 5 integriert ist bzw. werden soll.

Das Profil der Aussparung 12 zeigt neben einer Rinne für das Blitzschutzkabel 22 einen flacheren und breiteren Kanal, der sich beidseitig der Rinne erstreckt. Dieser Kanal hat den besonderen Vorteil, dass ausreichend Auflage- und Dichtflächen für die Abdichtung 13 zur Verfügung stehen, ohne dass die Oberseite 131 der Abdichtung 13 über die Oberfläche 111 der Fertigungsform 11 herausragt. Im Vergleich zu dem Ausführungsbeispiel gemäß Fig. 4a ist dadurch ermöglicht, dass das Fasermaterial 21 für den Rotorblattsteg 5 flach ausgelegt wird.

Das in Fig. 5a gezeigte Profil der Aussparung 12 ist auch in dem Bereich 122 der Aussparung 12 einsetzbar, in dem das Blitzschutzkabel 22 in den Rotorblattsteg 5 integriert ist bzw. werden soll. Dieser Fall ist beispielhaft in Fig. 5b dargestellt.

Dabei ist eine Abdeckung 14 für die Aussparung 12 vorgesehen, die beispielsweise als Hartfaserplatte ausgebildet ist und in Dicke und Breite an den Kanal der Aussparung 12 angepasst ist. Dadurch bilden die Oberseite 141 der Abdeckung 14 und die Oberfläche 111 der Fertigungsform eine gleichmäßige Fläche, wodurch ein flaches Auslegen des Fasermaterials 21 für den Rotorblattsteg 5 ermöglicht wird.

Außerdem ist in Fig. 5b eine weitere Lage Fasermaterial 15 gezeigt, die unterhalb des Blitzschutzkabels 22 und der Abdeckung 14 angeordnet ist und primär den Integrationsbereich von Rotorblattsteg 5 und Blitzschutzkabel 22 verstärkt.

### Bezugszeichenliste

- 1: Windenergieanlage
- 2: Rotorblatt
- 3: Rotorblattschale
- 4: Rotorblattgurt
- 5: Rotorblattsteg
- 6: Hinterkasten
- 11: Fertigungsform
- 111: Oberfläche
- 12: Aussparung
- 121: erster Bereich (Aussparung)
- 122: zweiter Bereich (Aussparung)
- 13: Abdichtung
- 131: Oberseite
- 14: Abdeckung
- 141: Oberseite
- 15: Fasermaterial
- 21: Fasermaterial
- 22: Anbauelement
- 23: Anschlusskabel
- 24: Rezeptor
- 221: erster Bereich (Anbauelement)
- 222: zweiter Bereich (Anbauelement)

## Patentansprüche

1. Einrichtung zur Fertigung eines Faserverbundbauteils (3, 4, 5), das mit einem Anbauelement (22) verbunden ist oder wird, für ein Rotorblatt (2) einer Windenergieanlage (1), wobei das Faserverbundbauteil (3, 4, 5) aus wenigstens einem Fasermaterial (15, 21) und wenigstens einem Matrixmaterial gefertigt ist oder wird, wobei das Anbauelement (22) mit einem ersten, außerhalb des Faserverbundbauteils (3, 4, 5) angeordneten Bereich (221) und einem zweiten, in das Faserverbundbauteil (3, 4, 5) integrierten Bereich (222) vorgesehen ist, umfassend eine Fertigungsform (1 1) für das Faserverbundbauteil (3, 4, 5) mit einer Aussparung (12), wobei die Aussparung (12) einen ersten Bereich (121) zur Aufnahme des ersten Bereichs (221) des Anbauelements (22) aufweist, und eine Rückhaltevorrichtung (13), mittels derer fließfähiges Matrixmaterial vom ersten Bereich (121) der Aussparung (12) zurückgehalten ist oder wird,
**dadurch gekennzeichnet, dass**
die Aussparung (12) einen zweiten Bereich (122) zur Aufnahme des zweiten Bereichs (222) des Anbauelements (22) aufweist.

2. Einrichtung nach Anspruch 1, **dadurch gekennzeichnet, dass** die Rückhaltevorrichtung (13) als Abdichtung (13) ausgebildet ist, mittels derer der erste Bereich (121) der Aussparung (12) undurchlässig für fließfähiges Matrixmaterial abgedichtet ist oder wird.

3. Einrichtung nach Anspruch 1 oder 2, **dadurch gekennzeichnet, dass** die Rückhaltevorrichtung (13) für den ersten Bereich (121) der Aussparung (12) wiederverwendbar ausgebildet ist.

4. Einrichtung nach einem der Ansprüche 1 bis 3, **dadurch gekennzeichnet, dass** die Rückhaltevorrichtung (13) für den ersten Bereich (121) der Aussparung (12) aus Silikon ausgebildet ist.

5. Einrichtung nach einem der Ansprüche 1 bis 4, **dadurch gekennzeichnet, dass** eine Abdeckung (14) vorgesehen ist, mittels derer der zweite Bereich (122) der Aussparung (12) durchlässig für fließendes Matrixmaterial wenigstens teilweise abgedeckt ist oder wird.

6. Einrichtung nach einem der Ansprüche 1 bis 5, **dadurch gekennzeichnet, dass** eine Oberseite (131) der Rückhaltevorrichtung (13) für den ersten Bereich (121) der Aussparung (12) und/oder eine Oberseite (141) der Abdeckung (14) für den zweiten Bereich (122) der Aussparung (12) im Wesentlichen eine Fortsetzung einer inneren Oberfläche (1 1 1) der Fertigungsform (1 1) bei der Aussparung (12) darstellt.

7. Einrichtung nach einem der Ansprüche 1 bis 6, **dadurch gekennzeichnet, dass** die Aussparung (12) und/oder die Rückhaltevorrichtung (13) für den ersten Bereich (121) der Aussparung (12) und/oder die Abdeckung (14) für den zweiten Bereich (122) der Aussparung (12) wenigstens abschnittsweise formkomplementär zu dem Anbauelement (22) ausgebildet ist oder sind.

8. Einrichtung nach einem der Ansprüche 5 bis 7, **dadurch gekennzeichnet, dass** die Abdeckung (14) für den zweiten Bereich (122) der Aussparung (12) als Hartfaserplatte ausgebildet ist.

9. Verfahren zum Fertigen eines Faserverbundbauteils (3, 4, 5), das mit einem Anbauelement (22) verbunden ist oder wird, für ein Rotorblatt (2) einer Windenergieanlage (1), wobei das Faserverbundbauteil (3, 4, 5) aus wenigstens einem Fasermaterial (15, 21) und wenigstens einem Matrixmaterial gefertigt ist oder wird, wobei ein Anbauelement (22) mit einem ersten, außerhalb des Faserverbundbauteils (2, 3, 4,) angeordneten Bereich (221) und mit einem zweiten, in das Faserverbundbauteil (3, 4, 5) integrierten Bereich (222) vorgesehen ist, insbesondere unter Verwendung einer Einrichtung zur Fertigung eines Faserverbundbauteils (3, 4, 5) nach einem der Ansprüche 1 bis 9, umfassend die folgenden Verfahrensschritte:
- Einbringen des Anbauelements (22) in eine Fertigungsform (1 1) für das Faserverbundbauteil (3, 4, 5) mit einer Aussparung (12), wobei der erste Bereich (221) des Anbauelements (22) in einem ersten Bereich (121) der Aussparung (12) angeordnet ist oder wird und wobei der zweite Bereich (222) des Anbauelements (22) in einem zweiten Bereich (122) der Aussparung angeordnet ist oder wird,
- Abdichten des ersten Bereichs (121) der Aussparung (12) gegen fließendes Matrixmaterial,
- Einbringen von Fasermaterial (15, 21) und fließfähigem Matrixmaterial für das Faserverbundbauteil (3, 4, 5) in die Fertigungsform (11).

10. Verfahren nach Anspruch 9, **dadurch gekennzeichnet, dass** in der Fertigungsform (1 1) wenigstens ein Teil des Fasermaterials (15, 21) unterhalb des zweiten Bereichs (221) des Anbauelements (22) angeordnet ist oder wird.

11. Verfahren nach Anspruch 9 oder 10, **dadurch gekennzeichnet**, der zweite Bereich (122) der Aussparung (12) für fließendes Matrixmaterial durchlässig wenigstens teilweise abgedeckt ist oder wird.

12. Verfahren nach einem der Ansprüche 9 bis 11, **dadurch gekennzeichnet, dass** der erste Bereich (121) der Aussparung (12) unter Verwendung von Silikon abgedichtet ist oder wird.

13. Einrichtung nach einem der Ansprüche 1 - 8 oder Verfahren nach einem der Ansprüche 9 - 12,
wobei es sich bei dem Faserverbundbauteil (3, 4, 5) um einen Rotorblattsteg (5) für ein Rotorblatt (2) einer Windenergieanlage (1)handelt.

14. Einrichtung oder Verfahren nach Anspruch 13,
wobei es sich bei dem Anbauelement (22) um ein Bestandteil einer Blitzschutzeinrichtung für das Rotorblatt (2) handelt.

15. Einrichtung oder Verfahren nach Anspruch 14,
wobei es sich bei dem Anbauelement (22) um ein Blitzschutzkabel (22) handelt.

## Claims

1. A device for manufacturing a fibre composite component (3, 4, 5), which is or will be connected to an attachment element (22), for a rotor blade (2) of a wind turbine (1), wherein the fibre composite component (3, 4, 5) is or will be manufactured from at least one fibre material (15, 21) and at least one matrix material, wherein the attachment element (22) is provided with a first region (221) arranged outside the fibre composite component (3, 4, 5) and a second region (222) integrated into the fibre composite component (3, 4, 5), comprising a manufacturing mould (11) for the fibre composite component (3, 4, 5) with a recess (12), wherein the recess (12) has a first region (121) for receiving the first region (221) of the attachment element (22), and a retention apparatus (13), by means of which flowable matrix material from the first region (121) of the recess (12) is or will be retained, **characterised in that**
the recess (12) has a second region (122) for receiving the second region (222) of the attachment element (22).

2. The device according to Claim 1, **characterised in that** the retention apparatus (13) is formed as a seal (13), by means of which the first region (121) of the recess (12) is or will be sealed impermeably for flowable matrix material.

3. The device according to Claim 1 or 2, **characterised in that** the retention apparatus (13) for the first region (121) of the recess (12) is formed to be reusable.

4. The device according to any one of Claims 1 to 3, **characterised in that** the retention apparatus (13) for the first region (121) of the recess (12) is formed from silicone.

5. The device according to any one of Claims 1 to 4, **characterised in that** a cover (14) is provided, by means of which the second region (122) of the recess (12) is or will be at least partially covered permeably for flowing matrix material.

6. The device according to any one of Claims 1 to 5, **characterised in that** an upper side (131) of the retention apparatus (13) for the first region (121) of the recess (12) and/or an upper side (141) of the cover (14) for the second region (122) of the recess (12) substantially represents a continuation of an inner surface (111) of the manufacturing mould (11) at the recess (12).

7. The device according to any one of Claims 1 to 6, **characterised in that** the recess (12) and/or the retention apparatus (13) for the first region (121) of the recess (12) and/or the cover (14) for the second region (122) of the recess (12) is or are formed with a shape that is complementary to the attachment element (22) at least in sections.

8. The device according to any one of Claims 5 to 7, **characterised in that** the cover (14) for the second region (122) of the recess (12) is formed as a hard fibre panel.

9. A method for manufacturing a fibre composite component (3, 4, 5), which is or will be connected to an attachment element (22), for a rotor blade (2) of a wind turbine (1), wherein the fibre composite component (3, 4, 5) is or will be manufactured from at least one fibre material (15, 21) and at least one matrix material, wherein an attachment element (22) is provided with a first region (221) arranged outside the fibre composite component (2, 3, 4) and with a second region (222) integrated into the fibre composite component (3, 4, 5), in particular using a device for manufacturing a fibre composite component (3, 4, 5) according to any one of Claims 1 to 9, comprising the following method steps:
- introducing the attachment element (22) into a manufacturing mould (11) for the fibre composite component (3, 4, 5) with a recess (12), wherein the first region (221) of the attachment element (22) is or will be arranged in a first region (121) of the recess (12) and wherein the second region (222) of the attachment element (22) is or will be arranged in a second region (122) of the recess,
- sealing the first region (121) of the recess (12) against flowing matrix material,
- introducing fibre material (15, 21) and flowable matrix material for the fibre composite component (3, 4, 5) into the manufacturing mould (11).

10. The method according to Claim 9, **characterised in that**, in the manufacturing mould (11), at least part of the fibre material (15, 21) is or will be arranged below the second region (221) of the attachment element (22).

11. The method according to Claim 9 or 10, **characterised in that** the second region (122) of the recess (12) is or will be at least partially covered permeably for flowing matrix material.

12. The method according to any one of Claims 9 to 11, **characterised in that** the first region (121) of the recess (12) is or will be sealed using silicone.

13. The device according to any one of Claims 1 - 8 or the method according to any one of Claims 9 - 12,
wherein the fibre composite component (3, 4, 5) is a rotor-blade crosspiece (5) for a rotor blade (2) of a wind turbine (1).

14. The device or method according to Claim 13,
wherein the attachment element (22) is a constituent of a lightning protection device for the rotor blade (2).

15. The device or method according to Claim 14,
wherein the attachment element (22) is a lightning protection cable (22).

## Revendications

1. Dispositif de fabrication d'une pièce structurale composite fibreuse (3, 4, 5), laquelle est ou sera reliée à un élément rapporté (22), pour une pale de rotor (2) d'une installation d'énergie éolienne (1), dans lequel la pièce structurale composite fibreuse (3, 4, 5) est ou sera fabriquée à partir d'au moins un matériau fibreux (15, 21) et d'au moins un matériau matriciel, dans lequel l'élément rapporté (22) est pourvu d'une première zone (221) disposée à l'extérieur de la pièce structurale composite fibreuse (3, 4, 5) et d'une deuxième zone (222) intégrée dans la pièce structurale composite fibreuse (3, 4, 5), comportant un moule de fabrication (1 1) pour la pièce structurale composite fibreuse (3, 4, 5) avec une cavité (12), dans lequel la cavité (12) comprend une première zone (121) pour la réception de la première zone (221) de l'élément rapporté (22), et un système de retenue (13) au moyen duquel le matériau matriciel fluide issu de la première zone (121) de la cavité (12) est ou sera retenu, **caractérisé en ce que** la cavité (12) comprend une deuxième zone (122) pour la réception de la deuxième zone (222) de l'élément rapporté (22).

2. Dispositif selon la revendication 1, **caractérisé en ce que** le système de retenue (13) est conçu sous la forme d'un joint d'étanchéité (13) au moyen duquel la première zone (121) de la cavité (12) est ou sera étanchéifiée de manière imperméable au matériau matriciel fluide.

3. Dispositif selon la revendication 1 ou la revendication 2, **caractérisé en ce que** le système de retenue (13) pour la première zone (121) de la cavité (12) est conçu de sorte à être réutilisable.

4. Dispositif selon l'une des revendications 1 à 3, **caractérisé en ce que** le système de retenue (13) pour la première zone (121) de la cavité (12) est en silicone.

5. Dispositif selon l'une des revendications 1 à 4, **caractérisé en ce qu'**il est prévu un couvercle (14) au moyen duquel la deuxième zone (122) de la cavité (12) est ou sera recouverte en étant au moins partiellement perméable au matériau matriciel fluide.

6. Dispositif selon l'une des revendications 1 à 5, **caractérisé en ce qu'**une face supérieure (131) du système de retenue (13) pour la première zone (121) de la cavité (12) et/ou une face supérieure (141) du couvercle (14) pour la deuxième zone (122) de la cavité (12) constitue(nt) essentiellement un prolongement d'une surface interne (1 1 1) du moule de fabrication (1 1) dans la cavité (12).

7. Dispositif selon l'une des revendications 1 à 6, **caractérisé en ce que** la cavité (12) et/ou le système de retenue (13) pour la première zone (121) de la cavité (12) et/ou le couvercle (14) pour la deuxième zone (122) de la cavité (12) est conçu(e) ou sont conçus au moins par endroits avec une forme complémentaire à l'élément rapporté (22).

8. Dispositif selon l'une des revendications 5 à 7, **caractérisé en ce que** le couvercle (14) pour la deuxième zone (122) de la cavité (12) est conçu sous la forme d'un panneau de fibres dur.

9. Procédé de fabrication d'une pièce structurale composite fibreuse (3, 4, 5), laquelle est ou sera reliée à un élément rapporté (22), pour une pale de rotor (2) d'une installation d'énergie éolienne (1), dans lequel la pièce structurale composite fibreuse (3, 4, 5) est ou sera fabriquée à partir d'au moins un matériau fibreux (15, 21) et d'au moins un matériau matriciel, dans lequel un élément rapporté (22) est pourvu d'une première zone (221) disposée à l'extérieur de la pièce structurale composite fibreuse (2, 3, 4) et d'une deuxième zone (222) intégrée dans la pièce structurale composite fibreuse (3, 4, 5), utilisant en particulier un dispositif de fabrication d'une pièce structurale composite fibreuse (3, 4, 5) selon l'une des revendications 1 à 9, comportant les étapes de procédé suivantes :
- introduction de l'élément rapporté (22) dans un moule de fabrication (1 1) pour la pièce structurale composite fibreuse (3, 4, 5) avec une cavité (12), dans lequel la première zone (221) de l'élément rapporté (22) est ou sera disposée dans une première zone (121) de la cavité (12) et dans lequel la deuxième zone (222) de l'élément rapporté (22) est ou sera disposée dans une deuxième zone (122) de la cavité,
- étanchéification de la première zone (121) de la cavité (12) contre le matériau matriciel fluide,
- introduction de matériau fibreux (15, 21) et de matériau matriciel fluide pour la pièce structurale composite fibreuse (3, 4, 5) dans le moule de fabrication (11).

10. Procédé selon la revendication 9, **caractérisé en ce que**, dans le moule de fabrication (1 1), au moins une partie du matériau fibreux (15, 21) est ou sera disposée au-dessous de la deuxième zone (221) de l'élément rapporté (22).

11. Procédé selon la revendication 9 ou la revendication 10, **caractérisé en ce que** la deuxième zone (122) de la cavité (12) est ou sera recouverte en étant au moins partiellement perméable au matériau matriciel fluide.

12. Procédé selon l'une des revendications 9 à 11, **caractérisé en ce que** la première zone (121) de la cavité (12) est ou sera étanchéifiée à l'aide de silicone.

13. Dispositif selon l'une des revendications 1 à 8 ou procédé selon l'une des revendications 9 à 12,
dans lequel la pièce structurale composite fibreuse (3, 4, 5) est une entretoise de pale de rotor (5) pour une pale de rotor (2) d'une installation d'énergie éolienne (1).

14. Dispositif ou procédé selon la revendication 13,
dans lequel l'élément rapporté (22) est une pièce constitutive d'un dispositif de protection contre la foudre pour la pale de rotor (2).

15. Dispositif ou procédé selon la revendication 14,
dans lequel l'élément rapporté (22) est un câble de protection contre la foudre (22).
